# EUROPEAN PATENT SPECIFICATION

(11) **EP 3 723 241 B1**
(45) Date of publication and mention of the grant of the patent: **24.05.2023**
(21) Application number: 17933944.5
(22) Date of filing: 08.12.2017
(51) Int. Cl.: H02K 1/276, H02K 15/03

(54) **ROTOR CORE FOR ROTATING ELECTRIC MACHINE AND METHOD FOR MANUFACTURING ROTOR CORE FOR ROTATING ELECTRIC MACHINE**
ROTORKERN FÜR EINE ROTIERENDE ELEKTRISCHE MASCHINE UND VERFAHREN ZUR HERSTELLUNG EINES ROTORKERNS FÜR EINE ROTIERENDE ELEKTRISCHE MASCHINE
NOYAU DE ROTOR POUR MACHINE ÉLECTRIQUE TOURNANTE ET PROCÉDÉ DE FABRICATION DE NOYAU DE ROTOR POUR MACHINE ÉLECTRIQUE TOURNANTE

(43) Date of publication of application: 14.10.2020
(73) Proprietor: Nissan Motor Co., Ltd., Yokohama-shi, Kanagawa 221-0023 (JP)
(72) Inventor: OCHI, Takaaki, Atsugi-shi Kanagawa 243-0123 (JP); MIZOKAMI, Ryouichi, Atsugi-shi Kanagawa 243-0123 (JP); INUZUKA, Kenta, Atsugi-shi Kanagawa 243-0123 (JP)
(74) Representative: Hoefer & Partner Patentanwälte mbB
(86) International application number: PCT/JP2017/044248
(87) International publication number: WO 2019/111414

(56) References cited:
- WO-A1-2015/198382
- WO-A1-2015/198382
- JP-A- 2010 207 073
- JP-A- 2010 207 073
- JP-A- 2011 259 689
- US-A1- 2011 316 382

## Description

### TECHNICAL FIELD

The present invention relates to a rotor core of a rotating electric machine and a method of manufacturing a rotor core of a rotating electric machine.

### BACKGROUND ART

As one method of manufacturing a rotor core that forms a part of a rotor of a rotating electric machine (motor), there is known a method of forming the rotor core by caulking and laminating a plurality of annular core pieces. However, in order to manufacture the rotor core by this method, a manufacturing apparatus is required that performs caulking and lamination.

According to a technique disclosed in JP2015-208066A, annular core pieces are each formed by a plurality of arc-shaped core pieces arranged in an annular shape, and further, when laminating the annular core pieces, the annular core pieces are arranged in such a way as to shift the phases of the arc-shaped core pieces in the circumferential direction, thereby forming a rotor core. Then, welding is performed in the lamination direction (axial direction) at part of the inner peripheral surface or the outer peripheral surface of the rotor core so that the arc-shaped core pieces laminated with the phases shifted in the circumferential direction are connected to each other. In this way, the laminated arc-shaped core pieces are integrally joined together so that the rotor core is configured.

### SUMMARY OF INVENTION

According to the technique disclosed in JP 2015- 208 066 A, in the end part, in the axial direction, of the laminated arc-shaped core pieces, the inner peripheral surfaces of the arc-shaped core pieces of the first layer and the inner peripheral surfaces of the arc-shaped core pieces of the second layer are welded to each other. On the other hand, the inner peripheral surfaces of the arc-shaped core pieces of the second and subsequent layers are welded to the inner peripheral surfaces of the arc-shaped core pieces on both sides in the axial direction. Therefore, since the number of the connecting portions by welding is smaller in the arc-shaped core pieces of the first layer than in the arc-shaped core pieces of the second or subsequent layer, the stress that acts on each welding portion becomes greater. Therefore, when, for example, the centrifugal force is large, such as during high speed rotation, there is a possibility that the welding of the annular core piece of the first layer is degraded to loosen the fixation.

Prior art document JP 2010- 207 073 A proposes a rotating electrical machine which is capable of suppressing generation of eddy current loss due to a harmonic components of an electric current and capable of improving the strength of a rotor. The rotating electrical machine has a stator and a rotor rotatable with respect to the stator. The rotor has a rotor core formed from a plurality of sheets piled up axially and a plurality of permanent magnets formed on the rotor core. A plurality of welds number limit areas, surrounding a rotor core circumferentially along the rotor core, are arranged axially in line around the outer-peripheral portion of the rotor core. In each of the plurality of welds number limit areas, the number of circumferential welds of the rotor core is identical to that of the pairs of poles of the rotor. Furthermore, the welds in the welds number limit areas adjacent to each other are arranged, being shifted circumferentially along the rotor core.

Prior art document US 2011 / 316 382 A1 suggests a rotor that includes a core made of a laminated steel sheet assembly including a plurality of laminated magnetic steel sheets each having a flat plate shape, the core including a through hole at a rotation center, a shaft inserted in a through hole of the core, an inner-peripheral side welded part located on an inner peripheral side of the core, the welded part being a welded section joining between adjacent steel sheets and joining the laminated steel sheet assembly to the shaft over a laminating direction, and an outer-peripheral side welded part located on an outer peripheral side of the core and in an end part in the laminating direction, the welded part being a welded section joining between some of the magnetic steel sheets, the joined steel sheets including a steel sheet forming an end face of the core in the laminating direction.

Prior art document JP 2011- 259 689 A refers to a rotor core and a fastening method of the rotor core and a rotation shaft for preventing the rotor core from being deformed in an axial direction due to shrinkage fitting load when the rotor core formed of a laminated steel plate without an end plate is fastened with the rotation shaft by shrinkage fitting. A rotor core is formed by laminating a plurality of circular steel plates, which have through holes engaged with a shaft, in the axial direction. First concave grooves which are depressed to an external side in a radial direction and extend in the axial direction and first convexes which project to an internal side in the radial direction and extend to the axial direction are alternately formed in a circumferential direction on an inner peripheral face dividing the through hole of the rotor core. Welding portions coupling the steel plates adjacent in the axial direction are arranged at projected tip faces of the first convexes. The welding portions are continuously disposed from one end to the other end in the axial direction.

Prior art document D4 WO 2015 / 198 382 A1 discloses a rotating electric machine synchronous rotor in which the anti-centrifugal strength reliability of a rotor core can be improved. The rotating electric machine synchronous rotor is equipped with: a cylindrical rotor core formed by stacking a plurality of circular arc-shaped core plates; and permanent magnets buried in the rotor core, wherein joint portions or weld joint portions for joining the circular arc-shaped core plates stacked in a rotor axis direction to each other are provided on an inner circumferential side of the rotor core, and the circular arc-shaped core plates include magnet holes opened on a plate outer circumferential side, and notch portions formed by notching both ends of an inner circumferential surface of the core plates while avoiding portions that become the joint portions or weld joint portions.

The object underlying the present invention is achieved by a rotor core of a rotating machine according to independent claim 1 and by a corresponding manufacturing method according to independent claim 5. Preferred embodiments are defined in the respective dependent claims.

A rotor core of a rotating electric machine according to the present invention is a rotor core of a rotating electric machine, wherein the rotor core is configured by laminating annular core pieces in an axial direction while shifting permanent magnetic poles of the annular core pieces in a circumferential direction, the annular core pieces each formed by arranging arc-shaped core pieces side by side in the circumferential direction. The rotor core includes a main welding portion where the arc-shaped core pieces laminated in the axial direction are welded to each other on an inner peripheral surface of the rotor core. Additional welding portions where arc-shaped core pieces of a first layer and arc-shaped core pieces of at least a second layer are welded to each other in an axial end part of the rotor core, only, on said inner peripheral surface of the rotor.

One additional welding portion from said additional welding portions is provided with respect to the main welding portion in one side of the axial end part. Another additional welding portion from said additional welding portions is provided with respect to the main welding portion in another side of the axial end part. The additional welding portion at one end and the additional welding portion at the other end are provided on different sides of the main welding portion in the circumferential direction. The other sides of the main welding portion in the circumferential direction, where said one and said another one additional welding portions are not provided, are free of additional welding portions.

### BRIEF DESCRIPTION OF DRAWINGS

FIG. 1 is an exploded perspective view of a rotor core of a first embodiment according to the present invention.
FIG. 2A is a perspective view of the rotor core.
FIG. 2B is an enlarged view of an area A of FIG. 2A.
FIG. 3 is a perspective view of a rotor core of a second embodiment according to the present invention.
FIG. 4A is a diagram illustrating end portions of the rotor core.
FIG. 4B is a diagram illustrating end portions of a rotor core of a comparative example.
FIG. 5 is a top view of a rotor core of a modification.
FIG. 6A is one example of a top view of the rotor core.
FIG. 6B is one example of a top view of the rotor core.
FIG. 6C is one example of a top view of the rotor core.
FIG. 6D is one example of a top view of the rotor core.
FIG. 7A is a perspective view of a rotor core of a third embodiment explaining the invention's technical background.
FIG. 7B is a top view of the rotor core.
FIG. 8A is a perspective view of a rotor core of a fourth embodiment explaining the invention's technical background.
FIG. 8B is a top view of the rotor core.
FIG. 9 is a top view of a rotor core of a fifth embodiment explaining the invention's technical background.
FIG. 10A is a perspective view of a rotor core of a sixth embodiment according to the present invention.
FIG. 10B is a diagram illustrating the inner periphery of the rotor core.

### DESCRIPTION OF EMBODIMENTS

Hereinafter, embodiments of the present invention will be described with reference to the drawings.

### (First Embodiment according to the present invention)

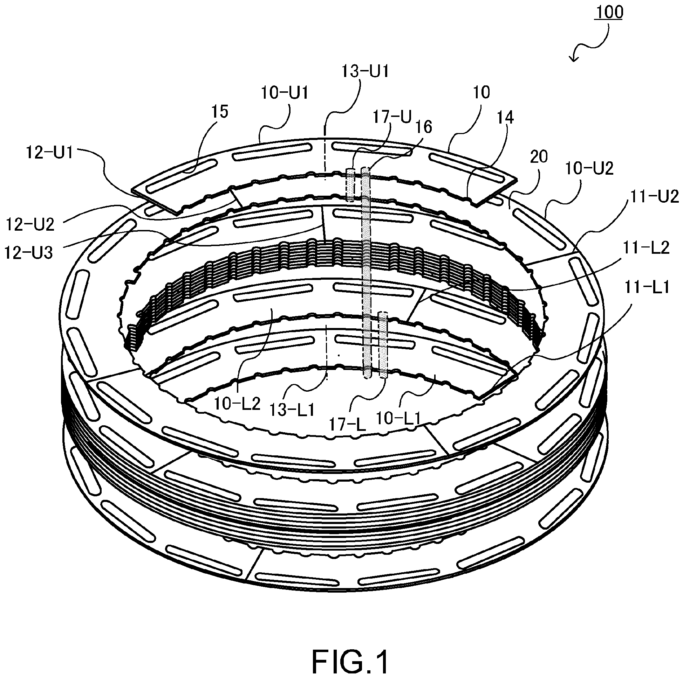

FIG. 1 is an exploded perspective view of a rotor core 100 forming a rotor of a rotating electric machine (motor) in a first embodiment according to the present invention.

An arc-shaped core piece 10 forms a part of a ring-shaped annular core piece 20 and, more specifically, is configured to form an angle of 90 degrees in the annular core piece 20. The annular core piece 20 is formed by arranging four arc-shaped core pieces 10 side by side in the circumferential direction. Then, the rotor core 100 is formed by laminating a plurality of annular core pieces 20.

In this figure, with respect to the annular core piece 20 of the first layer in the upper part in the figure, only one of the four arc-shaped core pieces 10 forming the annular core piece 20 are illustrated, and the other three arc-shaped core pieces 10 are omitted in terms of readability. Likewise, only the one arc-shaped core piece 10 is illustrated with respect to the annular core piece 20 of the first layer in the lower part.

Hereinafter, with respect to the configuration about the arc-shaped core pieces 10 and the annular core pieces 20, in the laminated state, suffixes of "-U1" and "-U2" are respectively added to reference symbols for the first layer and the second layer in the upper part. Suffixes of "-L1" and "-L2" are respectively added to reference symbols for the first layer and the second layer in the lower part for description. Further, with respect to the configuration about the arc-shaped core pieces 10 and the annular core pieces 20, when disregarding the upper-lower direction in the axial direction, suffixes of only "-1" and "-2" are respectively added to reference symbols for the first layer and the second layer.

In the laminated state, the annular core pieces 20 are arranged such that the boundaries between the arc-shaped core pieces 10 forming the annular core pieces 20 rotate in the same direction (in this embodiment, rotate counterclockwise facing the upper side) per a predetermined angle (in this embodiment, per "90/4" degrees). This is due to the fact that the rotor core 100 is used in the 16-pole motor. The arc-shaped core pieces 10 form four poles arranged annularly, and the annular core pieces 20 are shifted in phase per pole in the circumferential direction. Therefore, the annular core pieces 20 are laminated with the phases shifted per "90/4 (= 360/16)" degrees.

As illustrated, in the lower part of the rotor core 100, a clockwise end portion 11-L2 of the arc-shaped core piece 10-L2 of the second layer is offset counterclockwise by the predetermined angle with respect to a clockwise (right in the figure) end portion 11-L1 of the arc-shaped core piece 10-L1 of the first layer. In the upper part, in the order of the third layer, the second layer, and the first layer, counterclockwise end portions 12-U3, 12-U2, and 12-U1 of the arc-shaped core pieces 10 are offset counterclockwise by the predetermined angle in this order as going upward.

The arc-shaped core piece 10 is provided on an inner peripheral surface thereof with a plurality of recesses 14 arranged in the circumferential direction and each configured to extend in the axial direction and to be recessed. Further, a plurality of (in this embodiment, four) magnet insertion holes 15 is provided in an upper surface of the arc-shaped core piece 10 in the vicinity of the outer periphery. Since permanent magnets are inserted into the magnet insertion holes 15, the number of the magnet insertion holes 15 corresponds to the number of the poles of the motor. Accordingly, the middle point, in the circumferential direction, of the arc-shaped core piece 10 will be referred to as a pole center 13.

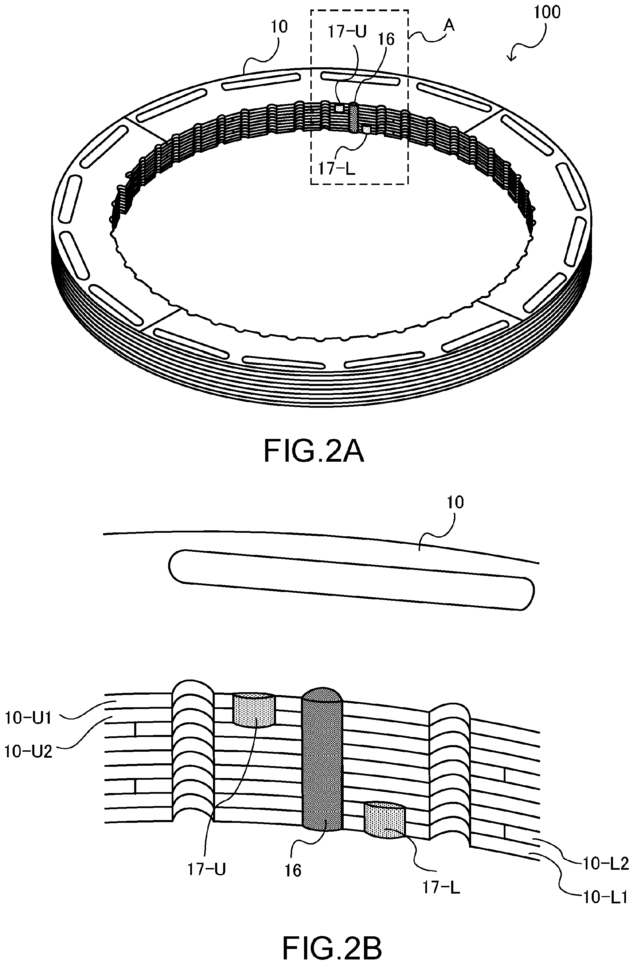

The laminated arc-shaped core pieces 10 are welded together in the axial direction (lamination direction) on the inner peripheries thereof at main welding portions 16 and additional welding portions 17-L, 17-U respectively provided at the upper and lower ends, so as to be integrated together as a whole to form the rotor core 100. Details of the main welding portion 16, the additional welding portion 17-L in the lower part, and the additional welding portion 17-U in the upper part will be described with reference to FIG. 2A and 2B.

FIG. 2A is a perspective view of the rotor core 100, and FIG. 2B is an enlarged view of an area A of FIG. 2A.

The arc-shaped core pieces 10 forming the annular core pieces 20 are respectively welded in the lamination direction at the plurality of recesses 14 extending in the axial direction. This welding portion will be referred to as the main welding portion 16.

Simultaneously, in the lower part, the arc-shaped core piece 10-L1 of the first layer is welded to the arc-shaped core piece 10-L2 of the second layer at not only the main welding portion 16, but also the inner peripheral portion located in the clockwise direction (right direction in the figure) with respect to the main welding portion 16. This welding portion will be referred to as the additional welding portion 17-L. Further, in the upper part, the arc-shaped core piece 10-U1 of the first layer is welded to the arc-shaped core piece 10-U2 of the second layer at not only the main welding portion 16, but also the inner peripheral portion located in the counterclockwise direction (left direction in the figure) with respect to the main welding portion 16. This welding portion will be referred to as the additional welding portion 17-U. Hereinafter, when the additional welding portion 17-L in the lower part and the additional welding portion 17-U in the upper part are not distinguished from each other, they will be collectively referred to as the additional welding portion 17.

In FIG. 2A, the welding portions for only the one arc-shaped core piece 10 are illustrated on the inner periphery of the annular core piece 20. However, the main welding portion 16 and the additional welding portion 17-L in the lower part or the additional welding portion 17-U in the upper part are provided also on the inner periphery of each of the other three arc-shaped core pieces 10 forming the annular core piece 20.

In this embodiment, the connection between the arc-shaped core piece 10-1 of the first layer and the arc-shaped core piece 10-2 of the second layer is performed by the main welding portion 16 and the additional welding portion 17, and the cross-sectional areas of the main welding portion 16 and the additional welding portion 17 are approximately equal to each other in the in-plane direction of a surface (boundary surface) where both are in contact with each other. Note that the cross-sectional area of the additional welding portion 17 may be greater than the cross-sectional area of the main welding portion 16.

In this embodiment, the one additional welding portion 17-L in the lower part and the one additional welding portion 17-U in the upper part are provided with respect to the one main welding portion 16. By minimizing the number of the additional welding portions 17 in this way, it is possible to achieve a reduction in manufacturing cost.

In this embodiment, with respect to the main welding portion 16, the additional welding portion 17-U is provided in the counterclockwise direction in the upper part, and the additional welding portion 17-L is provided in the clockwise direction in the lower part. That is, the additional welding portion 17-U in the upper part and the additional welding portion 17-L in the lower part are provided on the opposite sides of the main welding portion 16. This can also be described as follows.

Referring to FIG. 1, in the upper part, the end portions, in the circumferential direction, of the arc-shaped core piece 10-U2 of the second layer located under the pole center 13-U1 of the arc-shaped core piece 10 of the first layer illustrated do not coincide with the pole center 13-U1 and are asymmetric with respect to the pole center 13-U1 as to the position in the circumferential direction. Of these end portions, the counterclockwise end portion 12-U2 is closer in distance to the pole center 13-U1 than the clockwise end portion 11-U2.

In the positional relationship in the circumferential direction in the upper part, the additional welding portion 17-U is located on the counterclockwise side of the main welding portion 16. Further, the end portion 12-U2 of the second layer closer in distance to the pole center 13-U1, in the circumferential direction, of the arc-shaped core piece 10-U1 of the first layer is located on the counterclockwise side of the pole center 13-U1. In this way, the positional relationship of the additional welding portion 17-U with respect to the main welding portion 16 is in the counterclockwise direction like the positional relationship of the end portion 12-U2, closer to the pole center 13-U1, of the arc-shaped core piece 10-U2 with respect to the pole center 13-U1.

In the lower part, the end portions, in the circumferential direction, of the arc-shaped core piece 10-L2 of the second layer located above the pole center 13-L1 of the arc-shaped core piece 10-L1 of the first layer do not coincide with the pole center 13-L1 of the arc-shaped core piece 10-L2 of the first layer and are asymmetric with respect to the pole center 13-L1 as to the position in the circumferential direction. The clockwise end portion 11-L2 of the arc-shaped core piece 10-L2 of the second layer is closer in distance to the pole center 13-L1 of the arc-shaped core piece 10-L1 of the first layer than the counterclockwise end portion (not illustrated).

In the positional relationship in the circumferential direction in the lower part, the additional welding portion 17-L is located on the clockwise side of the main welding portion 16. Further, the end portion 11-L2 of the second layer closer in distance to the pole center 13-L1, in the circumferential direction, of the arc-shaped core piece 10-L1 of the first layer is located on the clockwise side of the pole center 13-L1. In this way, the positional relationship of the additional welding portion 17-L with respect to the main welding portion 16 is in the clockwise direction like the positional relationship of the end portion 11-L2, closer to the pole center 13-L1, of the arc-shaped core piece 10-L2 with respect to the pole center 13-L1.

Therefore, since the additional welding portion 17-U in the upper part and the additional welding portion 17-L in the lower part are provided on the opposite sides of the main welding portion 16, the deviation, in the circumferential direction, of the arrangement of the additional welding portions 17 is suppressed so that the welding can be further strengthened.

When manufacturing the rotor core 100, first, the arc-shaped core pieces 10 are arranged side by side in the circumferential direction to form the annular core pieces 20 (side-by-side arrangement step), the annular core pieces 20 are laminated while shifting the phases in the circumferential direction (lamination step), the arc-shaped core pieces 10 are respectively welded on the inner peripheries of the annular core pieces 20 to provide the main welding portions 16 (main welding step), and the arc-shaped core pieces 10 from the first layer to at least the second layer in each of the end parts in the axial direction are additionally welded to each other (additional welding step), so that the rotor core 100 is manufactured.

In this embodiment, the additional welding portion 17 welds together the two layers, i.e. the arc-shaped core piece 10-1 of the first layer and the arc-shaped core piece 10-2 of the second layer, but not limited thereto. It is satisfactory if the additional welding portion 17 welds together the arc-shaped core pieces 10 from the arc-shaped core piece 10-1 of the first layer to at least the arc-shaped core piece 10-2 of the second layer, and the arc-shaped core piece 10-3 of the third layer or more may also be welded.

According to the first embodiment, the following effects can be obtained.

According to the first embodiment, there are provided, on the side surface of the rotor core 100 formed by the laminated annular core pieces 20, the main welding portion 16 where the arc-shaped core pieces 10 are welded to each other in the axial direction, and the additional welding portion 17 where the arc-shaped core pieces 10 from the arc-shaped core piece 10-1 of the first layer to at least the arc-shaped core piece 10-2 of the second layer in the axial end part are welded to each other.

Herein, to examine an example where the additional welding portion 17 is not provided, the arc-shaped core piece 10-1 of the first layer is welded to the side surface of the arc-shaped core piece 10-2 of the second layer only at one portion. On the other hand, the arc-shaped core piece 10-n of the second or subsequent layer is welded to the side surfaces of the arc-shaped core pieces 10-n-1, 10-n+1, that are adjacent upward and downward in the lamination direction, at two portions. Therefore, since the arc-shaped core piece 10-1 of the first layer is welded only at one portion by the main welding portion 16, relatively large stress acts on the main welding portion 16 during rotation or the like.

It is conceivable to provide a plurality of main welding portions 16 for reinforcing the welding strength of the arc-shaped core piece 10-1 of the first layer. However, this may cause an increase in manufacturing cost due to an increase in welding time, degradation of dimensional accuracy due to an increase in welding strain, or the like.

On the other hand, in this embodiment, in order to increase the number of welding portions of the arc-shaped core piece 10-1 of the first layer where relatively large stress is generated during rotation, the additional welding portion 17 that welds together the arc-shaped core pieces from the arc-shaped core piece 10-1 of the first layer to at least the arc-shaped core piece 10-2 of the second layer is provided. Consequently, not only the welding can be more strengthened, but also the axial length of the additional welding portion 17 can be minimized, and therefore, it is possible to suppress an increase in manufacturing cost and degradation of dimensional accuracy.

According to the first embodiment, the cross-sectional area of the additional welding portion 17 is approximately equal to the cross-sectional area of the main welding portion 16 in the in-plane direction of the boundary surface between the arc-shaped core piece 10-1 of the first layer and the arc-shaped core piece 10-2 of the second layer. Alternatively, the cross-sectional area of the additional welding portion 17 is greater than the cross-sectional area of the main welding portion 16.

The arc-shaped core piece 10-1 of the first layer is welded to the arc-shaped core piece 10-2 of the second layer at two portions, i.e. the main welding portion 16 and the additional welding portion 17, and accordingly, the sum of the cross-sectional areas of the welding portions becomes approximately twice or greater than twice the cross-sectional area of the main welding portion 16. On the other hand, since the arc-shaped core piece 10-n of the second or subsequent layer is welded to the arc-shaped core pieces 10-n-1, 10-n+1, located on the upper and lower sides in the lamination direction, at the main welding portion 16, the sum of the cross-sectional areas of the welding portions becomes twice the cross-sectional area of the main welding portion 16. Therefore, since the total cross-sectional area of the welding portions equivalent to that of the arc-shaped core piece 10-n of the second or subsequent layer is ensured also for the arc-shaped core piece 10-1 of the first layer, it is possible to ensure the welding strength equal to or greater than that of the second or subsequent layer.

According to the first embodiment, the one additional welding portion 17 is provided with respect to the one main welding portion 16. Consequently, since the number of the additional welding portions 17 can be minimized, it is possible to achieve a reduction in manufacturing cost.

According to the first embodiment, the additional welding portions 17 are respectively provided at the upper and lower ends in the axial direction. Specifically, with respect to the main welding portion 16, the additional welding portion 17-U at the upper end is provided in the counterclockwise direction, and the additional welding portion 17-L at the lower end is provided in the clockwise direction. That is, the additional welding portion 17-U at the upper end and the additional welding portion 17-L at the lower end are provided in the opposite directions with respect to the main welding portion 16. This configuration can also be described as follows.

According to the first embodiment, the arc-shaped core pieces 10 are laminated such that the positions, in the circumferential direction, of both circumferential end portions 11-2, 12-2 of the arc-shaped core piece 10 of the second layer do not coincide with the pole center 13-1 of the arc-shaped core piece 10 of the first layer and are asymmetric with respect to the pole center 13-1 in the circumferential direction. In the circumferential direction, the position of the additional welding portion 17 with respect to the main welding portion 16 is on the same side (the counterclockwise side in the upper part, the clockwise side in the lower part) as the position of the circumferential end portion (12-2 in the upper part, 11-2 in the lower part), closer to the circumferential center of the arc-shaped core piece 10 of the first layer, of the arc-shaped core piece 10 of the second layer with respect to the circumferential center of the arc-shaped core piece 10 of the first layer. With this configuration, the additional welding portion 17-U at the upper end and the additional welding portion 17-L at the lower end are provided in the opposite directions with respect to the main welding portion 16.

In the entirety including the upper part and the lower part, since the additional welding portions 17-U, 17-L are provided on both circumferential sides of the main welding portion 16, the circumferential deviation of the additional welding portions 17 is suppressed so that it is possible to achieve an improvement in the welding strength of the arc-shaped core pieces 10.

### (Second Embodiment according to the present invention)

In the first embodiment according to the present invention, the description has been given of the example in which the one main welding portion 16 and the one additional welding portion 17 are provided with respect to the one arc-shaped core piece 10. In a second embodiment according to the present invention, a description will be given of an example in which a plurality of main welding portions 16 and a plurality of additional welding portions 17 are provided with respect to one arc-shaped core piece 10, and more specifically, an example in which a main welding portion 16 and additional welding portions 17 are provided per pole (per magnet insertion hole 15).

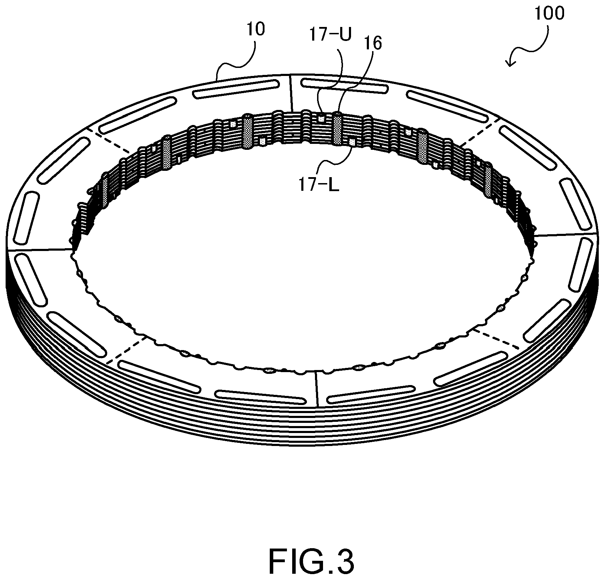

FIG. 3 is a perspective view of a rotor core 100 of the second embodiment.

According to this figure, one arc-shaped core piece 10-1 is provided with four main welding portions 16 respectively corresponding to the magnet insertion holes 15, i.e. corresponding to the poles. Additional welding portions 17 are provided with respect to each of the main welding portions 16.

Consequently, the additional welding portion 17-U in the upper part and the additional welding portion 17-L in the lower part are provided on both sides of the main welding portion 16. Therefore, the circumferential deviation of the additional welding portions 17 is suppressed so that it is possible to achieve an improvement in the welding strength of the arc-shaped core pieces 10.

According to the second embodiment, the following effects can be obtained.

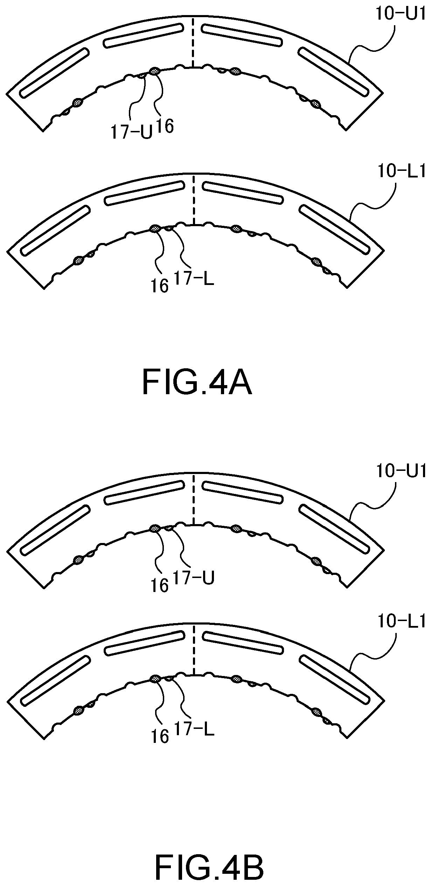

FIG. 4A is a top view of the rotor core 100 in this embodiment and illustrates the arc-shaped core piece 10-U1 of the first layer in the upper part and the arc-shaped core piece 10-L1 of the first layer in the lower part. According to this figure, in the arc-shaped core piece 10-111, the additional welding portion 17-U is provided in the counterclockwise direction with respect to the main welding portion 16. The additional welding portion 17-L is provided in the clockwise direction with respect to the main welding portion 16. That is, the additional welding portion 17-U in the upper part and the additional welding portion 17-L in the lower part are provided on both sides of the main welding portion 16.

On the other hand, FIG. 4B illustrates a top view of a rotor core 100 of a comparative example. In this comparative example, an additional welding portion 17-U in the upper part and an additional welding portion 17-L in the lower part are provided in the clockwise direction with respect to the main welding portion 16, i.e. only on one side of the main welding portion 16. Therefore, the arrangement of the additional welding portions 17 deviates in the circumferential direction.

In this way, in this embodiement, in the entirety including the upper part and the lower part, since the additional welding portions 17 are provided on both circumferential sides of the main welding portion 16, the circumferential deviation of the additional welding portions 17 is suppressed so that it is possible to achieve an improvement in the welding strength of the arc-shaped core pieces 10.

### (Modification)

In a modification, further, additional welding portions 17 are configured to be equal in width in the circumferential direction.

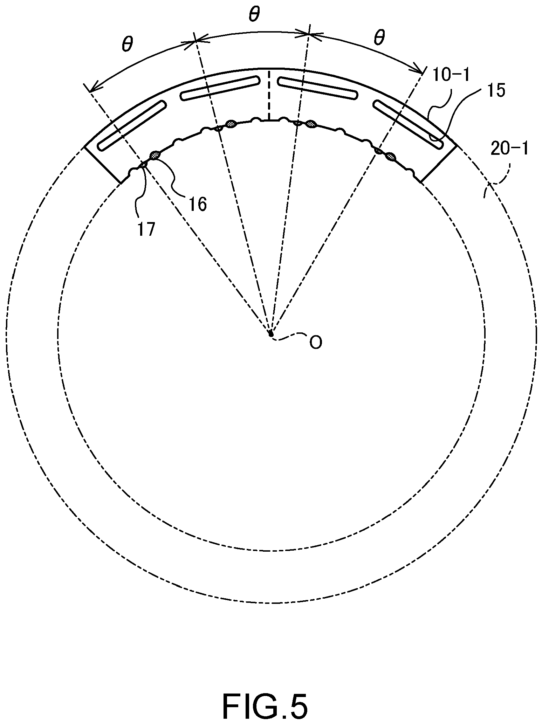

FIG. 5 is a top view of a rotor core 100. In FIG. 5, one of arc-shaped core pieces 10-1 forming an annular core piece 20-1 of the first layer is illustrated.

Main welding portions 16 are each provided at a position facing the circumferential center of a corresponding one of magnet insertion holes 15 arranged at regular intervals. The circumferential offset angles of the additional welding portions 17 with respect to the main welding portions 16 are equal to each other. Therefore, the additional welding portions 17 are provided at regular intervals in the circumferential direction (equal angle with respect to the center of the annular core piece 20 : θ). Consequently, it is possible to suppress a reduction in productivity as shown below.

In this modification, the four main welding portions 16 are provided with respect to the arc-shaped core piece 10-1, but not limited thereto. That is, it is satisfactory if the additional welding portions 17 are provided at regular intervals in the circumferential direction regardless of the intervals of the main welding portions 16.

According to this modification, the following effects can be obtained.

According to this modification, the additional welding portions 17 provided with respect to the main welding portions 16 are arranged at regular intervals (equal angle) in the circumferential direction. When the rotor core 100 is long in the lamination direction (axial direction) and there is variation in the thickness of the arc-shaped core pieces 10, the lamination number of the arc-shaped core pieces 10 differs per rotor core 100. In such a case, the circumferential arrangement of the arc-shaped core pieces 10 of the first layer differs per rotor core 100.

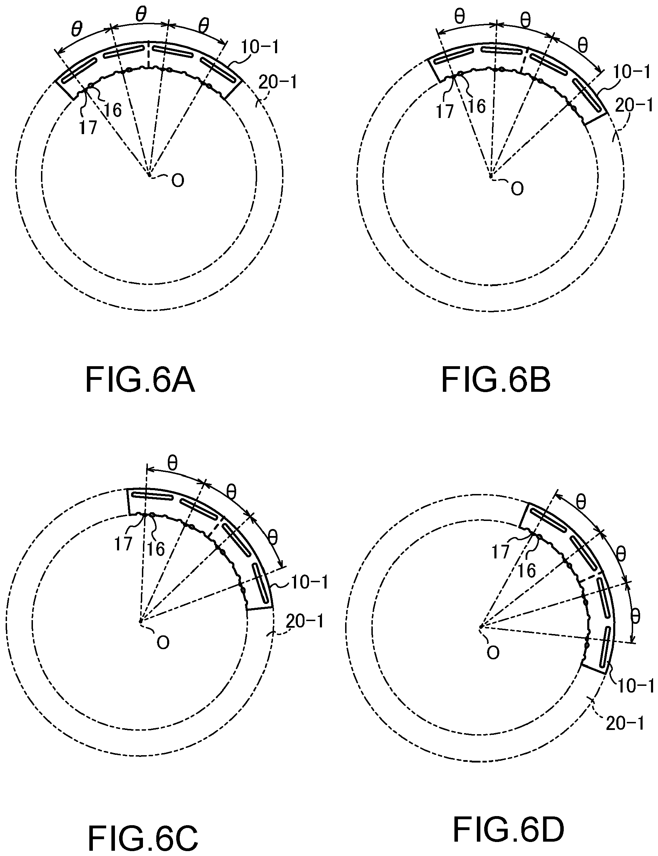

FIGS. 6A to 6D are each a top view of the rotor core 100 and respectively illustrate the cases where the circumferential arrangements of the arc-shaped core pieces 10 of the first layers differ from each other. As illustrated in these figures, it is assumed that there are four types of different arrangements of the arc-shaped core pieces 10 of the first layers. Even when the circumferential arrangements of the arc-shaped core pieces 10 differ from each other in this way, since the additional welding portions 17 are provided at regular intervals in the circumferential direction, the arrangements of the additional welding portions 17 in the respective arc-shaped core pieces 10 are the same. Therefore, since it is not necessary to configure the rotor core 100 taking into account the difference in the arrangement of the additional welding portions 17 in the arc-shaped core pieces 10, a reduction in productivity is suppressed.

### (Third Embodiment not being part of the present invention but explaining the invention's technical background)

In the first and second embodiments according to the present invention, the additional welding portions 17-U in the upper part are all provided on the same side (counterclockwise direction) of the main welding portions 16, and the additional welding portions 17-L in the lower part are all provided on the same side (clockwise direction) of the main welding portions 16. In a third embodiment explaining the invention's technical background, a description will be given of an example in which the arrangements of additional welding portions 17 with respect to main welding portions 16 differ from each other in each of the upper part and the lower part.

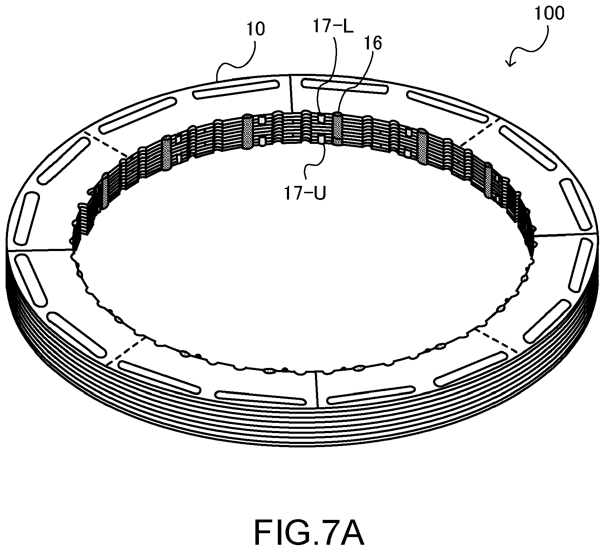

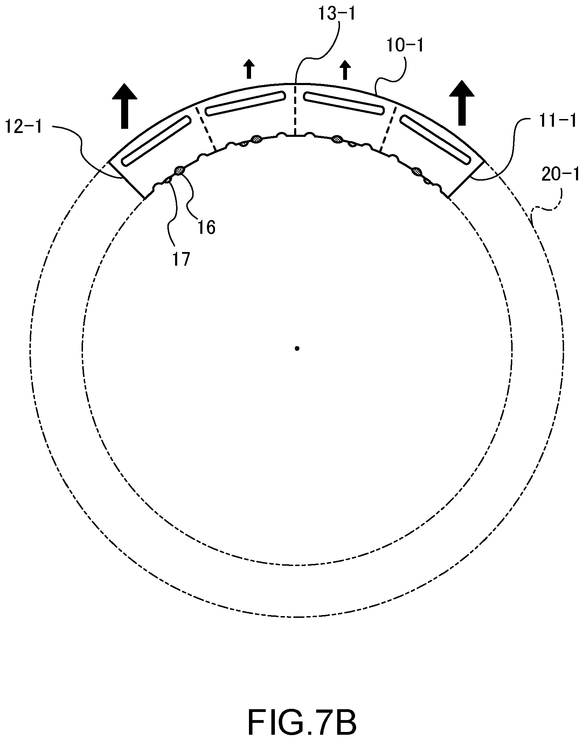

FIG. 7A is a perspective view of a rotor core 100 of the third embodiment, and FIG. 7B is a top view of the rotor core 100 and illustrates an arc-shaped core piece 10-1 of the first layer.

According to these figures, an additional welding portion 17 is provided, with respect to a corresponding main welding portion 16, on the side of a circumferential end portion, closer to the main welding portion 16, of circumferential end portions of the arc-shaped core piece 10.

That is, in the clockwise direction (rightward in FIG. 7B) with respect to a pole center 13-1, the additional welding portion 17 is provided, with respect to the corresponding main welding portion 16, on the side of an end portion 11-1 (the clockwise side, the right side in FIG. 7B) to which the corresponding main welding portion 16 is closer. Leftward of the pole center 13-1, the additional welding portion 17 is provided, with respect to the corresponding main welding portion 16, on the side of an end portion 12-1 (the counterclockwise side, the left side in FIG. 7B) to which the corresponding main welding portion 16 is closer. With this configuration, it is possible to reduce the stress that becomes relatively large at the end portions of the arc-shaped core piece 10 during rotation as indicated by arrows in the figure, and therefore, it is possible to suppress the loosening of the fixation, by welding, of the arc-shaped core piece 10.

According to the third embodiment, the following effects can be obtained.

In the arc-shaped core piece 10, the stress (centrifugal force) that is greater at the end portions (11-1, 12-1) than at the pole center 13-1 is generated due to the arc shape during rotation. In FIG. 7B, large arrows show that the stress generated at portions near the end portions of the arc-shaped core piece 10 is large, and small arrows show that the stress generated at portions near the pole center 13-1 is small.

In this embodiment, the additional welding portion 17 is provided, with respect to the corresponding main welding portion 16, on the side of the end portion, closer to the main welding portion 16, of the arc-shaped core piece 10-1. Consequently, since the additional welding portion 17 is provided on the side of the end portion of the arc-shaped core piece 10, where the stress is relatively large during rotation, relatively large stress is easily reduced so that it is possible to suppress the loosening of the fixation, by welding, of the arc-shaped core piece 10.

### (Fourth Embodiment not being part of the present invention but explaining the invention's technical background)

In the first to third embodiments, the description has been given of the example in which the one additional welding portion 17 is provided with respect to the one main welding portion 16 in each of the upper part and the lower part, but not limited thereto. In a fourth embodiment explaining the invention's technical background, a description will be given of an example in which a plurality of additional welding portions 17 is provided with respect to one main welding portion 16 in each of the upper part and the lower part.

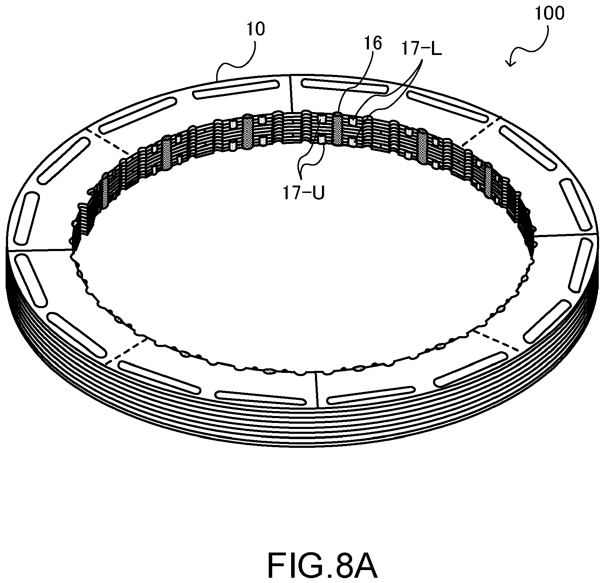

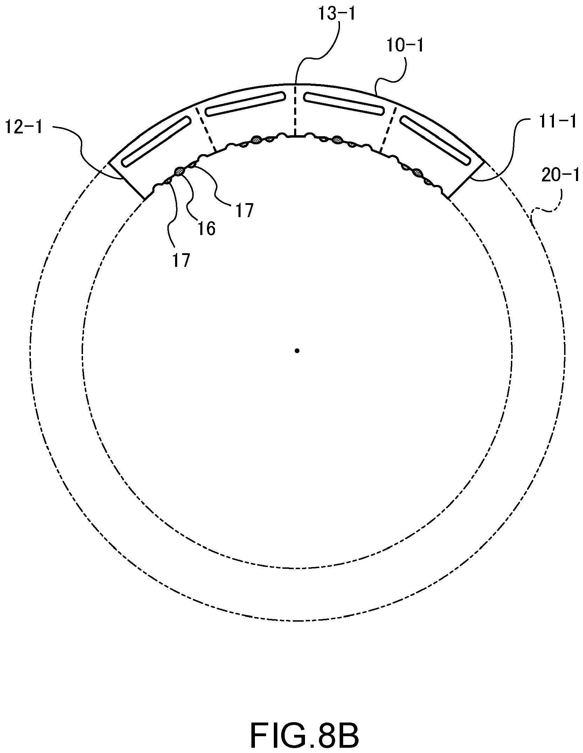

FIG. 8A is a perspective view of a rotor core 100 of the fourth embodiment, and FIG. 8B is a top view of the rotor core 100 and illustrates an arc-shaped core piece 10-1 of the first layer.

The arc-shaped core piece 10-1 is provided with a plurality of main welding portions 16, and two additional welding portions 17 are respectively provided on both sides of each of the main welding portions 16. Consequently, it is possible to achieve an increase in the welding strength of the arc-shaped core piece 10. Note that three or more additional welding portions 17 may be provided with respect to the main welding portion 16.

According to the fourth embodiment, the following effects can be obtained.

According to the fourth embodiment, the two or more additional welding portions 17 are provided with respect to the one main welding portion 16. Consequently, compared to the case where the one additional welding portion 17 is provided with respect to the one main welding portion 16, it is possible to achieve an improvement in welding strength in the case where the two additional welding portions 17 are provided with respect to the one main welding portion 16.

Further, since the cross-sectional area of each of the additional welding portions 17 for obtaining a desired welding strength can be reduced, it is possible to achieve a reduction in manufacturing cost. In this way, it is possible to improve the degree of freedom of design of the additional welding portions 17.

### (Fifth Embodiment not being part of the present invention but explaining the invention's technical background)

In the first to fourth embodiments, the description has been given of the example in which the additional welding portions 17 are respectively provided in the upper part and the lower part with respect to each of the main welding portions. In a fifth embodiment explaining the invention's technical background, a description will be given of an example in which additional welding portions 17 are provided only with respect to part of main welding portions 16, and there are those main welding portions 16 provided with no additional welding portion 17.

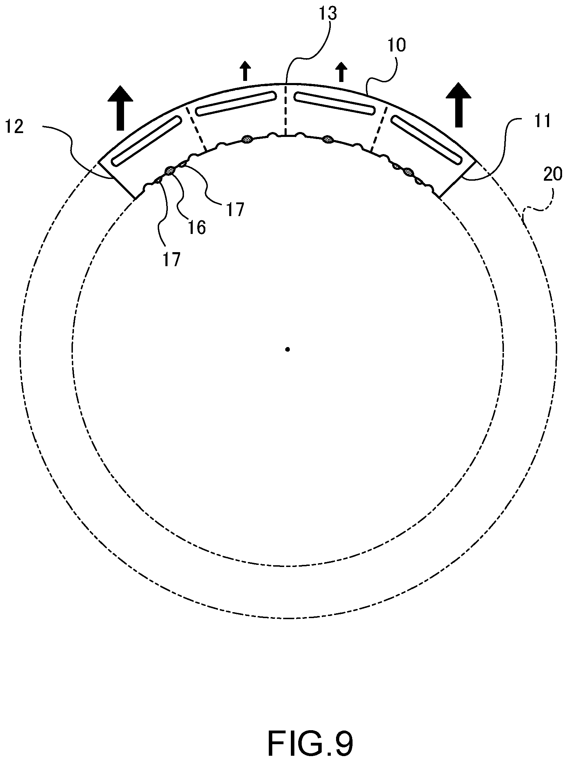

FIG. 9 is a top view of a rotor core 100 of the fifth embodiment and illustrates an arc-shaped core piece 10 of the first layer.

The arc-shaped core piece 10 is provided with four main welding portions 16. Additional welding portions 17 are respectively provided on both circumferential sides of the main welding portion 16 located in the vicinity of each of a clockwise end portion 11 and a counterclockwise end portion 12, but no additional welding portion 17 is provided with respect to the main welding portions 16 closer to a pole center 13. Consequently, it is possible to achieve an improvement in welding strength as shown below.

According to the fifth embodiment, the following effects can be obtained.

According to the fifth embodiment, the two or more additional welding portions 17 are provided with respect to the one main welding portion 16 located in the vicinity of each of the circumferential end portions 11, 12 of the arc-shaped core piece 10. That is, no additional welding portion 17 is provided with respect to the main welding portions 16 located in the vicinity of the pole center 13 of the arc-shaped core piece 10.

Herein, as described above with reference to FIG. 7B in the third embodiment, in the arc-shaped core piece 10-1, large stress is generated due to centrifugal force during rotation in the vicinity of each of the end portions 11, 12 compared to at the pole center 13. In this embodiment, the greater number of the additional welding portions 17 with respect to the main welding portion 16 is provided on the side near each of the end portions 11, 12 of the arc-shaped core piece 10. On the other hand, since no additional welding portion 17 is provided in the vicinity of the pole center 13 where the stress is relatively small, the number of the additional welding portions 17 can be reduced. Therefore, it is possible to efficiently reinforce the welding strength of the arc-shaped core piece 10 while achieving a reduction in manufacturing cost.

### (Sixth Embodiment according to the present invention)

In the first to fifth embodiments, the description has been given of the example in which the additional welding portions 17 are respectively provided in the upper part and the lower part in the axial direction. In this embodiment, a description will be given of an example in which additional welding portions 17 are provided only on one side in the axial direction.

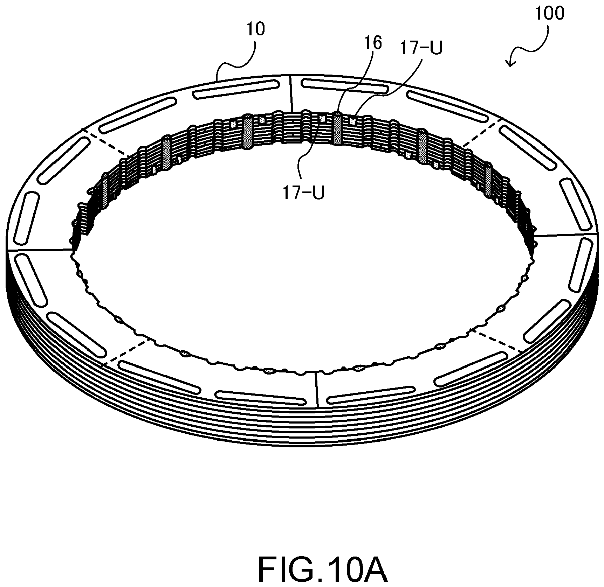

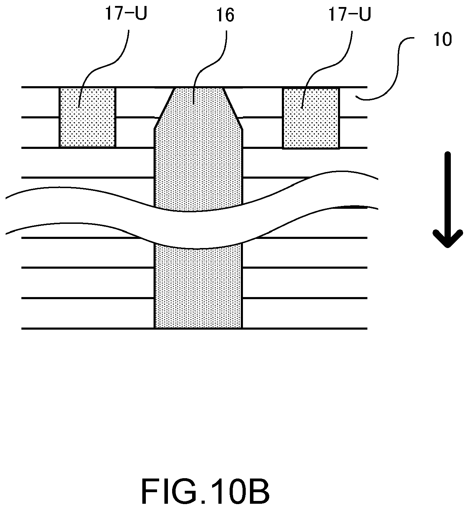

FIG. 10A is a perspective view of a rotor core 100 of the sixth embodiment according to the present invention, and FIG. 10B is a diagram illustrating the inner periphery of the rotor core 100. In these figures, laminated arc-shaped core pieces 10, main welding portions 16, and additional welding portions 17 are illustrated. Further, in this figure, the welding direction of the main welding portion 16 is indicated by an arrow. The additional welding portions 17-U are each provided only in the end part on the side near the start point of the welding direction. Consequently, it is possible to efficiently reinforce the welding strength as shown below.

According to the sixth embodiment, the following effects can be obtained.

According to the sixth embodiment, the main welding portion 16 is welded in the direction of the arrow in the figure in the axial direction. That is, the upper end is the start point, and the lower end is the end point. The additional welding portions 17 are provided only in the upper end part on the side of the start point at the time of the welding of the main welding portion 16.

The main welding portion 16 tends to decrease in cross-sectional area and in welding strength at the start point in the welding direction. Therefore, by providing the additional welding portions 17 only in the end part on the side of the start point of the welding of the main welding portion 16, it is possible to achieve an improvement in strength on the side where the welding strength is relatively small, and since the number of the welding portions can be minimized, it is possible to achieve a reduction in manufacturing cost.

The configurations of the rotor cores 100 in the embodiments described above are only examples, and not limited thereto. Herein, the 16-pole motor is exemplified, but the number of the poles is not limited thereto. The description has been given using the example in which the body of the rotor core 100 is manufactured by laminating the plurality of annular core pieces 20 each formed by the plurality of 4-pole arc-shaped core pieces 10 arranged annularly, while shifting the phases per pole in the circumferential direction, but the shape and the number of the poles of the arc-shaped core piece 10 and the number of the poles of the phase shifted at the time of the lamination are not limited thereto likewise. Further, there is shown the main welding portion 16 welded uniformly in the lamination direction at one portion per pole, i.e. at the pole center on the inner diameter side where the rotor exists, but the portion, the number, the position, and the aspect of the main welding portion 16 are not limited thereto. Further, in terms of improving the productivity, the additional welding portion 17 may be welded on not only the first layer and the second layer, but also a plurality of layers including the first layer and the second layer. Note that the number of the layers is preferably the number of the layers corresponding to about 7% of the lamination thickness of the rotor core pieces.

While the embodiments of the present invention have been described above, the above-described embodiments only show part of application examples of the present invention and are not intended to limit the technical scope of the present invention to the specific configurations of the above-described embodiments. The above-described embodiments can be combined within the scope of the invention, which is defined by the appended claims.

## Claims

1. A rotor core (100) of a rotating electric machine, wherein:
- the rotor core (100)
(A) is configured by laminating annular core pieces (20) in an axial direction
(B) while shifting permanent magnetic poles of the annular core pieces (20) in a circumferential direction, the annular core pieces (20) each formed by arranging arc-shaped core pieces (10) side by side in the circumferential direction,
- the rotor core (100) comprises:
(C) a main welding portion (16) where the arc-shaped core pieces (10) laminated in the axial direction are welded to each other on an inner peripheral surface of the rotor core (100); and
(D) additional welding portions (17; 17-L, 17-U) where arc-shaped core pieces (10; 10-L1, 10-U1) of a first layer and arc-shaped core pieces (10; 10-L2, 10-U2) of at least a second layer are welded to each other in an axial end part of the rotor core (100) only, on said inner peripheral surface of the rotor (100),
- one additional welding portion (17; 17-L, 17-U) from said additional welding portions (17; 17-L, 17-U) is provided with respect to the main welding portion (16) in one side of the axial end part,
- another additional welding portion (17; 17-U, 17-L) from said additional welding portions (17; 17-L, 17-U) is provided with respect to the main welding portion (16) in another side of the axial end part,
- the additional welding portion (17; 17-L, 17-U) at one end and the additional welding portion (17; 17-U, 17-L) at the other end are provided on different sides of the main welding portion (16) in the circumferential direction, and
- the other sides of the main welding portion (16) in the circumferential direction, where said one and said another one additional welding portions (17; 17-U, 17-L) are not provided, are free of additional welding portions.

2. The rotor core (100) according to claim 1, wherein, in a boundary surface between the arc-shaped core pieces (10; 10-U1, 10-L1) of the first layer and the arc-shaped core pieces (10; 10-U2, 10-L2) of the second layer in the axial end part, a cross-sectional area of the additional welding portions (17; 17-L, 17-U) is approximately equal to a cross-sectional area of the main welding portion (16) or is greater than the cross-sectional area of the main welding portion (16).

3. The rotor core (100) according to claim 1 or 2, wherein:
- the arc-shaped core pieces (10) are laminated such that, in the axial end part, positions, in the circumferential direction, of circumferential end portions of the arc-shaped core piece (10; 10-U2, 10-L2) of the second layer do not coincide with a circumferential center of the arc-shaped core piece (10; 10-U1, 10-L1) of the first layer and are asymmetric with respect to the circumferential center in the circumferential direction; and
- in the circumferential direction, a position of an additional welding portion (17; 17-L, 17-U) with respect to the main welding portion (16) is on the same side as a position of the circumferential end portion, closer to the circumferential center of the arc-shaped core piece (10; 10-U1, 10-L1) of the first layer, of the arc-shaped core piece (10; 10-U2, 10-L2) of the second layer with respect to the circumferential center

4. The rotor core (100) according to any one of the preceding claims, wherein:
- a plurality of the main welding portions (16) and a plurality of the additional welding portions (17) are provided with respect to the one arc-shaped core piece (10); and
- the additional welding portions (17) are provided at regular intervals in the circumferential direction.

5. A method of manufacturing a rotor core (100) of a rotating electric machine by arranging arc-shaped core pieces (10) side by side in a circumferential direction and laminating the arc-shaped core pieces (10) in an axial direction, the arc-shaped core pieces (10) each forming a part of a corresponding one of annular core pieces (20), the method comprising:
- a side-by-side arrangement step of arranging the arc-shaped core pieces (10) side by side in the circumferential direction;
- a lamination step of laminating the annular core pieces (20) while shifting permanent magnetic poles in the circumferential direction;
- a main welding step of welding the arc-shaped core pieces (10) laminated in the axial direction to provide a main welding portion (16) on an inner peripheral surface of the rotor core (100); and
- an additional welding step of welding arc-shaped core pieces (10; 10-U1, 10-L1) from a first layer to arc-shaped core pieces (10; 10-U2, 10-L2) from at least a second layer in an axial end part to thereby provide additional welding portions (17; 17-L, 17-U) on said inner peripheral surface of the rotor core (100),
wherein:
- one additional welding portion (17; 17-L, 17-U) from said additional welding portions (17; 17-L, 17-U) is provided with respect to the main welding portion (16) in one side of the axial end part,
- another additional welding portion (17; 17-U, 17-L) from said additional welding portions (17; 17-L, 17-U) is provided with respect to the main welding portion (16) in another side of the axial end part,
- the additional welding portion (17; 17-L, 17-U) at one end and the additional welding portion (17; 17-U, 17-L) at the other end are provided on different sides of the main welding portion (16) in the circumferential direction, and
- the other sides of the main welding portion (16) in the circumferential direction, where said one and said another one additional welding portions (17; 17-U, 17-L) are not provided, are free of additional welding portions.

## Patentansprüche

1. Rotorkern (100) einer rotierenden elektrischen Maschine, wobei:
- der Rotorkern (100)
(A) durch Laminieren ringförmiger Kernstücke (20) in einer axialen Richtung konfiguriert ist
(B) beim Verschieben von Permanentmagnetpolen der ringförmigen Kernstücke (20) in einer Umfangsrichtung, wobei die ringförmigen Kernstücke (20) jeweils durch Anordnen bogenförmiger Kernstücke (10) nebeneinander in der Umfangsrichtung gebildet sind,
- der Rotorkern (100) umfasst:
(C) einen Hauptschweißabschnitt (16), an dem die bogenförmigen Kernstücke (10), die in der axialen Richtung laminiert sind, an einer inneren Umfangsfläche des Rotorkerns (100) miteinander verschweißt sind; und
(D) Zusatzschweißabschnitte (17; 17-L, 17-U), an denen bogenförmige Kernstücke (10; 10-L1, 10-U1) einer ersten Schicht und bogenförmige Kernstücke (10; 10-L2, 10-U2) mindestens einer zweiten Schicht nur in einem axialen Endabschnitt des Rotorkerns (100) an der inneren Umfangsfläche des Rotors (100) miteinander verschweißt sind,
- ein zusätzlicher Schweißabschnitt (17; 17-L, 17-U) von den Zusatzschweißabschnitten (17; 17-L, 17-U) in Bezug auf den Hauptschweißabschnitt (16) in einer Seite des axialen Endabschnitts vorgesehen ist,
- ein anderer zusätzlicher Schweißabschnitt (17; 17-U, 17-L) von den Zusatzschweißabschnitten (17; 17-L, 17-U) in Bezug auf den Hauptschweißabschnitt (16) in einer anderen Seite des axialen Endabschnitts vorgesehen ist,
- der Zusatzschweißabschnitt (17; 17-L, 17-U) an einem Ende und der Zusatzschweißabschnitt (17; 17-U, 17-L) an dem anderen Ende an verschiedenen Seiten des Hauptschweißabschnitts (16) in der Umfangsrichtung vorgesehen sind, und
- die anderen Seiten des Hauptschweißabschnitts (16) in der Umfangsrichtung, an denen der eine und der andere von Zusatzschweißabschnitten (17; 17-U, 17-L) nicht vorgesehen sind, frei von Zusatzschweißabschnitten sind.

2. Rotorkern (100) nach Anspruch 1, wobei in einer Grenzfläche zwischen den bogenförmigen Kernstücken (10; 10-U1, 10-L1) der ersten Schicht und den bogenförmigen Kernstücken (10; 10-U2, 10-L2) der zweiten Schicht in dem axialen Endabschnitt eine Querschnittsfläche der Zusatzschweißabschnitte (17; 17-L, 17-U) ungefähr gleich einer Querschnittsfläche des Hauptschweißabschnitts (16) ist oder größer ist als die Querschnittsfläche des Hauptschweißabschnitts (16).

3. Rotorkern (100) nach Anspruch 1 oder 2, wobei:
- die bogenförmigen Kernstücke (10) laminiert sind, sodass in dem axialen Endabschnitt Positionen von Umfangsendabschnitten des bogenförmigen Kernstücks (10; 10-U2, 10-L2) der zweiten Schicht in der Umfangsrichtung nicht mit einer Umfangsmitte des bogenförmigen Kernstücks (10; 10-U1, 10-L1) der ersten Schicht übereinstimmen und in Bezug auf die Umfangsmitte in der Umfangsrichtung asymmetrisch sind; und
- in der Umfangsrichtung eine Position eines Zusatzschweißabschnitts (17; 17-L, 17-U) in Bezug auf den Hauptschweißabschnitt (16) auf der gleichen Seite ist wie eine Position des Umfangsendabschnitts, näher an der Umfangsmitte des bogenförmigen Kernstücks (10; 10-U1, 10-L1) der ersten Schicht, des bogenförmigen Kernstücks (10; 10-U2, 10-L2) der zweiten Schicht in Bezug auf die Umfangsmitte.

4. Rotorkern (100) nach einem der vorhergehenden Ansprüche, wobei:
- eine Mehrzahl der Hauptschweißabschnitte (16) und eine Mehrzahl der Zusatzschweißabschnitte (17) in Bezug auf das eine bogenförmige Kernstück (10) vorgesehen sind; und
- die Zusatzschweißabschnitte (17) mit regelmäßigen Abständen in der Umfangsrichtung vorgesehen sind.

5. Verfahren zur Herstellung eines Rotorkerns (100) einer rotierenden elektrischen Maschine durch Anordnen von bogenförmigen Kernstücken (10) nebeneinander in einer Umfangsrichtung und Laminieren der bogenförmigen Kernstücke (10) in einer axialen Richtung, wobei die bogenförmigen Kernstücke (10) jeweils einen Abschnitt eines entsprechenden von ringförmigen Kernstücken (20) bilden,
wobei das Verfahren umfasst:
- einen Schritt zum Anordnen nebeneinander, wobei die bogenförmigen Kernstücke (10) in die Umfangsrichtung nebeneinander angeordnet werden;
- einen Schritt zum Laminieren der ringförmigen Kernstücke (20) beim Verschieben von Permanentmagnetpolen in die Umfangsrichtung;
- einen Schritt zum Hauptschweißen der bogenförmigen Kernstücke (10), die in der axialen Richtung laminiert sind, um einen Hauptschweißabschnitt (16) auf einer inneren Umfangsfläche des Rotorkerns (100) bereitzustellen; und
- einen Schritt zum Zusatzschweißen, wobei bogenförmige Kernstücke (10; 10-U1, 10-L1) aus einer ersten Schicht mit bogenförmigen Kernstücken (10; 10-U2, 10-L2) aus mindestens einer zweiten Schicht in einem axialen Endabschnitt verschweißt werden, um somit Zusatzschweißabschnitte (17; 17-L, 17-U) auf der inneren Umfangsfläche des Rotorkerns (100) bereitzustellen,
wobei:
- ein Zusatzschweißabschnitt (17; 17-L, 17-U) aus den Zusatzschweißabschnitten (17; 17-L, 17-U) in Bezug auf den Hauptschweißabschnitt (16) in einer Seite des axialen Endabschnitts vorgesehen wird,
- ein anderer Zusatzschweißabschnitt (17; 17-U, 17-L) aus den Zusatzschweißabschnitten (17; 17-L, 17-U) in Bezug auf den Hauptschweißabschnitt (16) in einer anderen Seite des axialen Endabschnitts vorgesehen wird,
- der Zusatzschweißabschnitt (17; 17-L, 17-U) an einem Ende und der Zusatzschweißabschnitt (17; 17-U, 17-L) an dem anderen Ende auf verschiedenen Seiten des Hauptschweißabschnitts (16) in der Umfangsrichtung vorgesehen werden, und
- die anderen Seiten des Hauptschweißabschnitts (16) in der Umfangsrichtung, an denen der eine und der andere von Zusatzschweißabschnitten (17; 17-U, 17-L) nicht vorgesehen sind, frei von Zusatzschweißabschnitten sind.

## Revendications

1. Noyau de rotor (100) d'une machine tournante électrique, dans lequel :
- le noyau de rotor (100)
(A)est configuré en stratifiant des pièces de noyau annulaires (20) dans une direction axiale
(B)tout en déplaçant les pôles magnétiques permanents des pièces de noyau annulaires (20) dans une direction circonférentielle, les pièces de noyau annulaires (20) étant chacune formées en agençant des pièces de noyau en forme d'arc (10) côte à côte dans la direction circonférentielle,
- le noyau de rotor (100) comprend :
(C) une partie de soudage principale (16) où les pièces de noyau en forme d'arc (10) stratifiées dans la direction axiale sont soudées les unes aux autres sur une surface périphérique interne du noyau de rotor (100) ; et
(D) des parties de soudage supplémentaires (17 ; 17-L, 17-U) où des pièces de noyau en forme d'arc (10; 10-L1, 10-U1) d'une première couche et des pièces de noyau en forme d'arc (10 ; 10-L2 , 10- U2) d'au moins une deuxième couche sont soudées les unes aux autres dans une partie d'extrémité axiale du noyau de rotor (100) uniquement, sur ladite surface périphérique interne du rotor (100),
- une partie de soudage supplémentaire (17 ; 17-L, 17-U) parmi lesdites parties de soudage supplémentaires (17 ; 17-L, 17-U) est prévue par rapport à la partie de soudage principale (16) dans un côté de la partie d'extrémité axiale,
- une autre partie de soudage supplémentaire (17 ; 17-U, 17-L) parmi lesdites parties de soudage supplémentaires (17 ; 17-L, 17-U) est prévue par rapport à la partie de soudage principale (16) dans un autre côté de la partie d'extrémité axiale,
- la partie de soudage supplémentaire (17 ; 17-L, 17-U) au niveau d'une extrémité et la partie de soudage supplémentaire (17 ; 17-U, 17-L) au niveau de l'autre extrémité sont prévues sur des côtés différents de la partie de soudage principale (16) dans la direction circonférentielle, et
- les autres côtés de la partie de soudage principale (16) dans la direction circonférentielle, où ladite une et ladite autre parties de soudage supplémentaires (17 ; 17-U, 17-L) ne sont pas prévues, sont dépourvus de parties de soudage supplémentaires.

2. Noyau de rotor (100) selon la revendication 1, dans lequel, dans une surface limite entre les pièces de noyau en forme d'arc (10 ; 10-U1, 10-L1) de la première couche et les pièces de noyau en forme d'arc (10 ; 10-U2, 10-L2) de la deuxième couche dans la partie d'extrémité axiale, une aire de section transversale des parties de soudage supplémentaires (17 ; 17-L, 17-U) est approximativement égale à une aire de section transversale de la partie de soudage principale (16) ou est supérieure à l'aire de section transversale de la partie de soudage principale (16).

3. Noyau de rotor (100) selon la revendication 1 ou 2, dans lequel :
- les pièces de noyau en forme d'arc (10) sont stratifiées de telle sorte que, dans la partie d'extrémité axiale, les positions, dans la direction circonférentielle, des parties d'extrémité circonférentielles de la pièce de noyau en forme d'arc (10 ; 10-U2, 10-L2) de la deuxième couche ne coïncident pas avec un centre circonférentiel de la pièce de noyau en forme d'arc (10 ; 10-U1, 10-L1) de la première couche et soient asymétriques par rapport au centre circonférentiel dans la direction circonférentielle ; et
- dans la direction circonférentielle, une position d'une partie de soudage supplémentaire (17 ; 17-L, 17-U) par rapport à la partie de soudage principale (16) est du même côté qu'une position de la partie d'extrémité circonférentielle, plus proche du centre circonférentiel de la pièce de noyau en forme d'arc (10 ; 10-U1, 10-L1) de la première couche, de la pièce de noyau en forme d'arc (10 ; 10-U2, 10-L2) de la deuxième couche par rapport au centre circonférentiel.

4. Noyau de rotor (100) selon l'une quelconque des revendications précédentes, dans lequel :
- une pluralité de parties de soudage principales (16) et une pluralité de parties de soudage supplémentaires (17) sont prévues par rapport à la pièce de noyau en forme d'arc (10) ; et
- les parties de soudage supplémentaires (17) sont prévues à intervalles réguliers dans la direction circonférentielle.

5. Procédé de fabrication d'un noyau de rotor (100) d'une machine tournante électrique en agençant des pièces de noyau en forme d'arc (10) côte à côte dans une direction circonférentielle et en stratifiant les pièces de noyau en forme d'arc (10) dans une direction axiale, les pièces de noyau en forme d'arc (10) faisant chacune partie d'une pièce correspondante de pièces de noyau annulaires (20),
le procédé comprenant :
- une étape d'agencement côte à côte consistant à agencer les pièces de noyau en forme d'arc (10) côte à côte dans la direction circonférentielle ;
- une étape de stratification consistant à stratifier les pièces de noyau annulaires (20) tout en déplaçant les pôles magnétiques permanents dans la direction circonférentielle ;
- une étape de soudage principale consistant à souder les pièces de noyau en forme d'arc (10) stratifiées dans la direction axiale pour fournir une partie de soudage principale (16) sur une surface périphérique interne du noyau de rotor (100) ; et
- une étape de soudage supplémentaire consistant à souder des pièces de noyau en forme d'arc (10, 10-U1, 10-L1) provenant d'une première couche à des pièces de noyau en forme d'arc (10 ; 10-U2, 10-L2) provenant d'au moins une deuxième couche dans une partie d'extrémité axiale pour fournir ainsi des parties de soudage supplémentaires (17 ; 17-L, 17-U) sur ladite surface périphérique interne du noyau de rotor (100),
dans lequel :
- une partie de soudage supplémentaire (17 ; 17-L, 17-U) parmi lesdites parties de soudage supplémentaires (17 ; 17-L, 17-U) est prévue par rapport à la partie de soudage principale (16) dans un côté de la partie d'extrémité axiale,
- une autre partie de soudage supplémentaire (17 ; 17-U, 17-L) parmi lesdites parties de soudage supplémentaires (17 ; 17-L, 17-U) est prévue par rapport à la partie de soudage principale (16) dans un autre côté de la partie d'extrémité axiale,
- la partie de soudage supplémentaire (17 ; 17-L, 17-U) au niveau d'une extrémité et la partie de soudage supplémentaire (17 ; 17-U, 17-L) au niveau de l'autre extrémité sont prévues sur des côtés différents de la partie de soudage principale (16) dans la direction circonférentielle, et
- les autres côtés de la partie de soudage principale (16) dans la direction circonférentielle, où ladite une et ladite autre parties de soudage supplémentaires (17 ; 17-U, 17-L) ne sont pas prévues, sont dépourvus de parties de soudage supplémentaires.
